(19) **Europäisches Patentamt**
**European Patent Office**
**Office européen des brevets**

(11) **EP 1 521 860 B1**

(12) **EUROPEAN PATENT SPECIFICATION**

(45) Date of publication and mention
of the grant of the patent:
**05.12.2018 Bulletin 2018/49**

(51) Int Cl.:
***C22C 38/04*** *(2006.01)*    ***C21D 9/52*** *(2006.01)*
***C22C 38/02*** *(2006.01)*

(21) Application number: **03736359.5**

(86) International application number:
**PCT/KR2003/001302**

(22) Date of filing: **03.07.2003**

(87) International publication number:
**WO 2004/007785 (22.01.2004 Gazette 2004/04)**

(54) **QUENCHED AND TEMPERED STEEL WIRE WITH SUPERIOR CHARACTERISTICS OF COLD FORGING**

ABGESCHRECKTER UND ANGELASSENER STAHLDRAHT MIT ÜBERLEGENEN KALTSCHMIEDEEIGENSCHAFTEN

FIL D'ACIER TREMPÉ ET REVENU PRÉSENTANT DES CARACTÉRISTIQUES DE FORGEAGE À FROID SUPÉRIEURES

(84) Designated Contracting States:
**BE CH DE ES FR GB LI**

(30) Priority: **11.07.2002 KR 2002040253**

(43) Date of publication of application:
**13.04.2005 Bulletin 2005/15**

(73) Proprietor: **Samhwa Steel Co., Ltd.**
**Pusan 617-825 (KR)**

(72) Inventor: **AHN, Soon-Tae**
**Pusan 617-825 (KR)**

(74) Representative: **Kilian Kilian & Partner**
**Aidenbachstraße 54**
**81379 München (DE)**

(56) References cited:
**EP-A- 0 058 016**    **EP-A- 1 293 578**
**JP-A- 5 320 749**    **JP-A- 9 067 622**
**JP-A- 2000 336 460**    **KR-A- 98 049 282**
**KR-A- 99 055 102**    **US-A- 4 604 145**

• **PATENT ABSTRACTS OF JAPAN vol. 013, no. 260 (C-607), 15 June 1989 (1989-06-15) & JP 01 062416 A (KOBE STEEL LTD), 8 March 1989 (1989-03-08)**

**Description**

<u>Technical Field</u>

The present invention relates to steel wires or steel rods, suitable for use in manufacturing various parts for machine structures, such as bolts and shafts, having relatively high strength. More specifically, the present invention is directed to a method for determining the suitability in cold forging of a quenched and tempered steel wire with superior cold forging characteristics, whereby additional quenching and tempering process after a cold forging is not needed by maintaining a new factor within a specific range which is affecting the cold forging characteristics of the steel wire.

<u>Background Art</u>

In general, parts for machines, such as hexagonal head bolts, ball studs, shafts, etc., are produced by subjecting steel wires or steel rods (hereinafter, referred to as 'steel wire') to cold forging procedures. Specifically, the parts with relatively high tensile strength between 700 and 1300 Mpa are manufactured in such a way that steel wire is heated at about 700°C for more than ten hours, so that their micro structures are spheroidized to improve cold forging properties, and then subjected to cold forging. Thereafter, the cold forged parts are necessarily subjected to additional heat treatment, such as quenching and tempering, to enhance the strength and toughness. That is, it is necessary to perform a plurality of manufacturing procedures due to its complicated manufacturing process, as shown below:

(Conventional manufacturing process)

Steel wire or steel rod → spheroidizing for a long period →cold forging → heating at high temperatures (850°C or more) → quenching (water or oil) → tempering → product

Hence, the conventional process has the following problems, and should be improved in energy efficiency, productivity and working conditions.

(1) A spheroidizing annealing process of steel wire for a long period leads to high energy loss and low productivity.
(2) Since cold forged parts are additionally subjected to quenching and tempering to enhance the strength and toughness thereof in a manufacturing process, their manufacturing time is lengthened. In addition, working conditions deteriorate where they are subjected to heat treatment in a manufacturing place. Where the heat treatment is subcontracted to an outside manufacturer, costs for heat treatment and labor for managing delivery schedules are increased, thereby complicating overall process management.
(3) Attributed to the problems disclosed in above items (1) and (2), productivity is reduced in view of the heat treatment process. Therefore, there exists an urgent need to improve productivity

Accordingly, low productivity, high manufacturing costs, and inferior working conditions, resulting from the heat treatment before or after the cold forging process, should be effectively improved.

EP 1 293 578 A2 discloses steel wires having quenched and tempered structure prior to a cold forging process, wherein a product (n × YS) of a yield strength (YS) and a work hardening coefficient (n), obtained by a tensile test performed with respect to the steel wire, is within a range of 4.0 - 11.0 kg/mm$^2$.

<u>Disclosure of the Invention</u>

Leading to the present invention, intensive and thorough research on efficient manufacturing process of quenched and tempered steel wire, carried out by the present inventors aiming to the determination of forging suitability and to avoid the problems encountered in the related art, resulted in the finding that a quenching and tempering process, which have been conventionally performed after cold forging, are conducted before cold forging process, whereby a quenched and tempered steel wire is subjected to only cold forging to manufacture a desired product, with no speroidizing annealing.

Therefore, the object of the present invention is to provide a quenched and tempered steel wire with superior cold forging characteristics.

The object is achieved by providing a method for determining the suitability of a steel wire for cold forging as specified in claim 1.

<u>Brief Description of the Drawings</u>

FIG. 1 is a graph illustrating a relationship between critical compressibility ($H_{crit}$) and percent spheroidization of carbides in a quenched and tempered test piece evaluated according to the present invention;

FIG. 2 is a sectional view of carbide present in a structure of a quenched and tempered steel wire evaluated according to the present invention;

FIGS. 3a and 3b are enlarged photographs of the structure of quenched and tempered steel wire, photographed by a transmission electron microscope, in which FIG. 3 a shows the structure of a conventionally quenched and tempered steel wire and FIG. 3b shows the structure of a quenched and tempered steel wire evaluated according to the present invention;

FIGS. 4a and 4b are views illustrating the shape of a compression test piece, in which FIG. 4a is a perspective view to show an overall shape and FIG. 4b is a plan view to show a notched part; and

FIG. 5 is a front view illustrating a hexagonal headed flange bolt.

## Best Mode for Carrying Out the Invention

Since a quenched and tempered steel wire has high strength, a desired product cannot be manufactured merely by subjecting such a steel wire to a cold forging process. Therefore, as a result of lots of studies to manufacture a variety of complicated machine structural parts from high strength steel wire by a cold forging process, the present inventors have found that superior cold forging characteristics can result when a quenched and tempered steel wire having tensile strength of 700-1300 Mpa has percent spheroidization of carbides deposited therein of 30% or more, as observed by a transmission electron microscope.

In other words, when the percent spheroidization of the precipitated carbides in the steel wire quenched and tempered to have tensile strength of 700-1300 Mpa before the cold forging process is not less than 30%, the steel wire has superior cold forging characteristics even though being high in strength. Thus, a cold forging process may be efficiently performed. Further, even after the cold forging process, the cold forged parts have relatively high strength required for various parts for machine structures. Accordingly, there is needed no additional heat treatment, such as quenching and tempering, to increase strength.

In the present invention, the quenched and tempered steel wire comprises a C-Si-Mn alloy, consisting essentially of 0.1-0.5 wt% of C, 1.0 wt% or less of Si, 0.2-2.5 wt% of Mn, with the balance being Fe and inevitable impurities. As necessary, the quenched and tempered steel wire further includes any one selected from among 0.05-2.0 wt% of Cr, 0.05-1.5 wt% of Mo, 0.0003-0.0050 wt% of B, or mixtures thereof.

Respective components constituting the quenched and tempered steel wire are defined as below in terms of properties and amounts.

C: 0.1-0.5 wt%

C is the most important element for use in increasing strength upon a quenching process. Generally speaking, if C is used in an amount less than 0.1 wt%, hardening effects by a quenching heat treatment cannot be expected. Meanwhile, if C is used in the amount exceeding 0.5 wt%, carbides are excessively deposited, thus reducing toughness and increasing resistance to deformation, resulting in decreasing a service life of manufactured tools as well as generating cracks upon a cold forging process.

Si: 1.0 wt% or less

Si is used to deoxidize the steel and to increase the strength by solid-solution characteristics. However, the addition of Si exceeding 1.0 wt% leads to the reduction in toughness, and deformation resistance is enhanced upon a cold forging process, thus generating cracks and shortening a service life of tools. This is because Si is solid-dissolved in the deposited carbides, and thus interrupts carbon movements so as to prevent carbides from spheroidizing.

Mn: 0.2-2.5 wt%

Mn functions to enhance solid-solution characteristics. When C and Si are used in smaller amounts to avoid the enhancement of deformation resistance due to excessive addition of C and Si, Mn is used to supplement the strength of the steel when C and Si are relatively low. For this, Mn is used in the amount of at least 0.2 wt%, and does not exceed 2.5 wt% because excessive addition of Mn results in the increase in the toughness and deformation resistance.

Cr: 0.05-2.0 wt%

Cr is used to increase strength, quenchability and toughness. The addition of Cr less than 0.05 wt% results in the reduction in the properties as stated above. Also, when expensive Cr is used in the amount exceeding 2.0 wt%, economic benefits are negated. Thus, a lower limit of Cr is set to 0.05 wt%, and an upper limit of Cr is to 2.0 wt%.

Mo: 0.05-1.5 wt%

Mo has the same addition effects as Cr. That is, when Mo is used in the amount less than 0.05 wt%, the above properties become poor. On the other hand, the addition of Mo exceeding 1.5 wt% results in increasing the resistance to deformation. Hence, Mo should not exceed 1.5 wt%.

B: 0.0003-0.0050 wt%

B is used to increase quenchability. If the adding amount of B is less than 0.0003 wt%, there are no addition effects. Meanwhile, if the amount exceeds 0.0050 wt%, the quenchability is slightly decreased. Further, B reacts with N in the steel structure to produce BN, which functions to embrittle the grain boundaries. Thus, Ti with higher affinity to N is added in the amount of 0.01-0.05 wt%, so as to increase the addition effects of B. As well, Zr or Nb having the same function to Ti is preferably used.

P and S, as inevitable impurities, act to reduce a degree of deformation upon cold processing. Particularly, if these components are used in the amount exceeding 0.030 wt%, many cracks appear upon cold processing. Thus, it is favorable that the amount of P and S is in the range of 0.030 wt% or less.

As for the quenched and tempered steel wire, tensile strength after the quenching and tempering treatment is limited in the range of 700-1300 Mpa. If tensile strength is less than 700 Mpa, the ductility increases. Thus, only when being cold forged in small quantities, a hot rolled wire material (structure: ferrite + pearlite) may be subjected to a cold forging process. Further, the steel wire having tensile strength of the above value is unsuitable for use in machine parts. On the other hand, at tensile strength exceeding 1300 Mpa, hardness of the wire material is high, thus reducing a service life of tools. In addition, it is difficult to make machine parts having a complicated shape.

Further, the reason why the percent spheroidization of carbides of the steel wire is defined to 30% or more to achieve superior cold forging characteristics, as observed by a transmission electron microscope, is described, later.

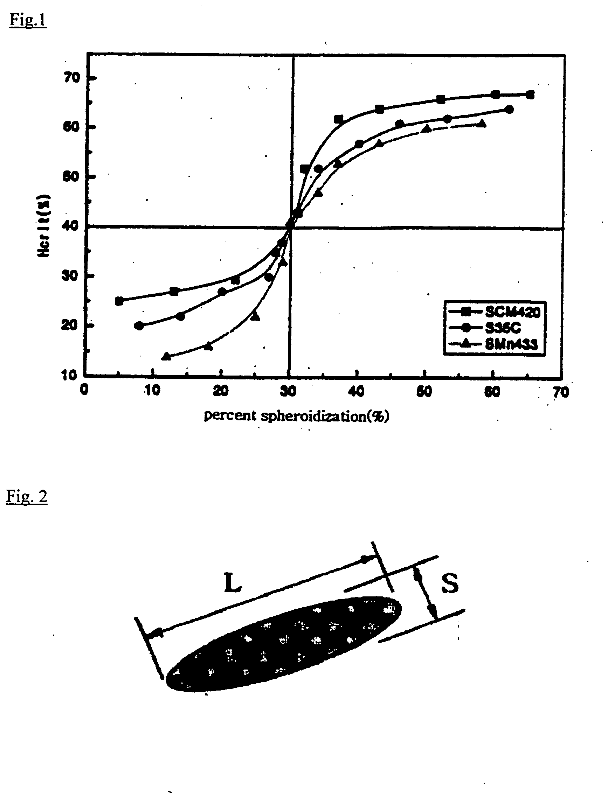

Referring to FIG. 1, 16mm across wire materials, including JIS G 4105 SCM420, JIS G 4051 S35C and JIS G 4106 SMn433, are drawn to have a diameter of 15.0 mm, and heated at Ac3 point or higher and then cooled with water or oil. Each wire material is tempered under conditions of various heating temperatures and heating times and then observed by a transmission electron microscope. Behavior of critical compressibility ($M_{crit}$) according to the percent spheroidization of carbides of the wire material is shown in FIG. 1. Depending on shapes of carbides precipitated from the martensite base, cold forging characteristics are varied. In particular, when the percent spheroidization is not less than 30%, critical compressibility as an index showing cold forging characteristics, is drastically increased to 40% or more. Thereby, excellent cold forging characteristics are exhibited.

This is because a distance between neighboring carbides is broadened as the shapes of the precipitated carbides are close to a spheroidal form, the dislocations generated upon cold forging easily pass through therebetween, resulting in enhancing the ductility required for cold forging.

With the intention of maintaining the percent spheroidization of carbides at 30% or more, temperature or time conditions required for performing a tempering process are further increased in the ranges capable of obtaining desired tensile strength, compared to general tempering conditions.

To determine the critical compressibility and the percent spheroidization of carbides of FIG. 1, test pieces are prepared and the values of the above factors are calculated, according to the following procedures.

As for the measurement of the percent spheroidization of carbides, the quenched and tempered steel wires are subjected to mechanical cutting, chemical polishing and electrolytic polishing at a cross section thereof, to prepare a thin film having a thickness of 0.1 mm or less. Thereafter, a 1/4 point of a circular diameter of the thin film is photographed at 50,000-100,000 magnifications by means of a transmission electron microscope.

Then, on the photograph, a circle having 50-70 mm across is marked, in which respective carbides are measured for long directional length (L) and short directional length (S), as shown in FIG. 2. The short length is divided by the long length, which is shown as a percentage (%):

$$\text{Percent Spheroidization} = S/L \times 100\ (\%)$$

As such, the representative value is determined by measuring each percent spheroidization of the measurable carbides in the marked circle, which are then averaged, with the exception of the highest and the lowest values. The carbides at the lath boundaries or grain boundaries are excluded from the determination.

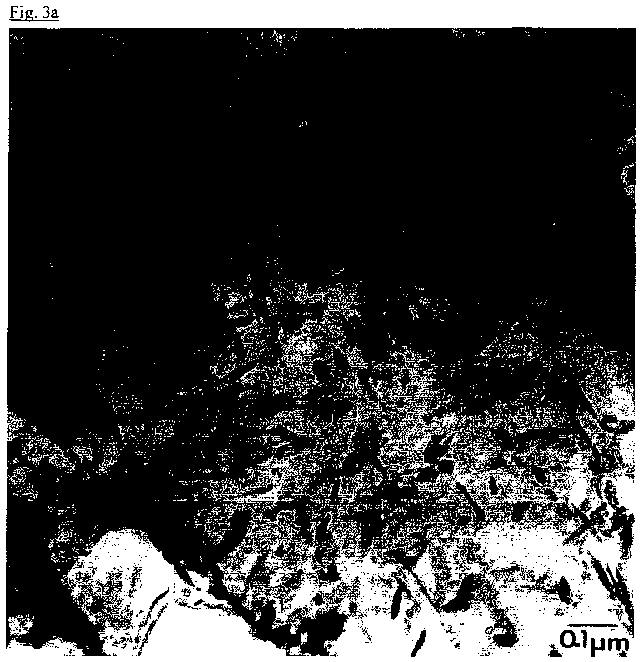

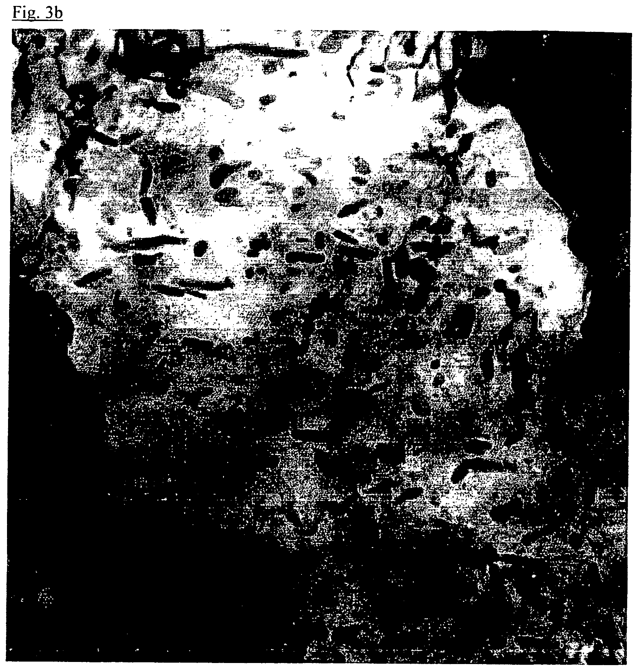

FIGS. 3a and 3b are enlarged photographs of the structure of the quenched and tempered steel wire photographed by a transmission electron microscope, in which FIG. 3a shows the structure of a steel wire quenched and tempered conventionally and FIG. 3b shows the structure of the steel wire quenched and tempered according to the present invention. In the case of the conventionally treated steel wire shown in FIG. 3a, needle-shaped carbides are present in a base structure and also a distance between adjacent carbides is very narrow. As shown in FIG. 3b, carbides in the steel wire evaluated according to the present invention are present in a spheroidal form, and the distance between neighboring carbides is relatively broad.

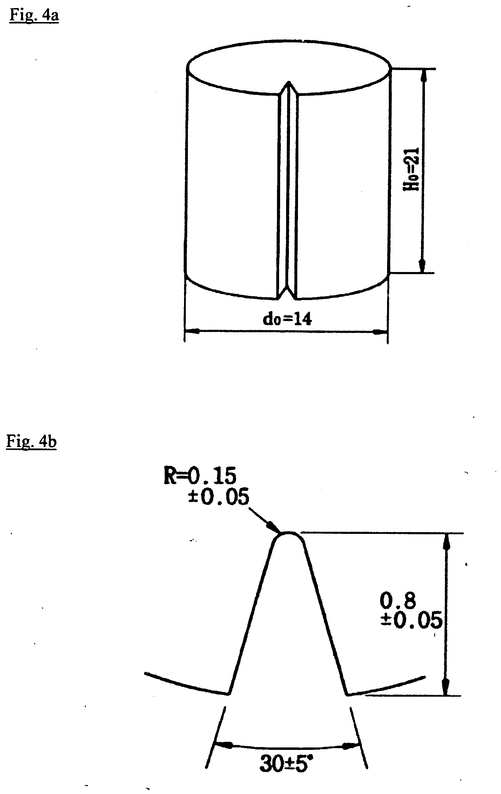

In addition, the measurement of the critical compressibility is carried out by subjecting a compression test piece as shown in FIGS. 4a and 4b to a V-notch process and then a compressing process at various heights, whereby a bottom surface of the V-notched part is observed 10 magnifications by a magnifying glass. The critical compressibility ($H_{crit}$) when 1 mm long cracks appear is calculated according to the following equation:

$$H_{crit} = \frac{H_0 - H_1}{H_1} \times 100(\%)$$

wherein

H$_0$: an original height of a test piece (mm)
H$_1$: a height of a test piece when 1 mm cracks are generated on a bottom surface of V-notch (mm)

The V-notch compression test is used to evaluate whether cold forging characteristics are superior. The present inventors have practically performed cold forging processing for a plurality of steel wire test pieces having different values of critical compressibility. Thereby, it can be confirmed that cold forging characteristics are superior when the critical compressibility is 40% or more. Thus, the above value is regarded as a parameter showing cold forging characteristics.

In addition, the cold forging characteristics of the quenched and tempered steel are greatly affected by the percent spheroidization of carbides precipitated after quenching and tempering. In particular, when the percent spheroidization of carbides is not less than 30%, the quenched and tempered steel wire with superior cold forging characteristics can be manufactured. From this, it appears that the percent spheroidization acts as an important factor required for manufacturing the steel wire having superior cold forging characteristics.

The present invention will be more clearly understood from the following example.

To clarify the above results, seven kinds of 16 mm across hot rolled wire rods having chemical compositions shown in Table 1, below, were used and drawn to have a diameter of 15 mm.

TABLE 1

| Chemical Compositions of Steel Wire (wt%) | | | | | | | | | |
|---|---|---|---|---|---|---|---|---|---|
| Steel Wire Sample No. | C | Si | Mn | 0.010 | S | Cr | Mo | B | Fe |
| 1 | 0.18 | 0.15 | 1.45 | 0.013 | 0.00 7 | - | - | 0.0020 | bal. |
| 2 | 0.20 | 0.25 | 0.75 | 0.013 | 0.008 | 1.01 | - | - | bal. |
| 3 | 0.23 | 0.27 | 0.82 | 0.009 | 0.007 | 0.95 | 0.23 | - | bal. |
| 4 | 0.32 | 0.96 | 0.75 | 0.010 | 0.009 | - | - | - | bal. |
| 5 | 0.34 | 0.24 | 0.92 | 0.011 | 0.010 | - | - | - | bal. |
| 6 | 0.35 | 0.43 | 1.75 | 0.012 | 0.007 | - | - | - | bal. |
| 7 | 0.37 | 0.28 | 0.73 | 0.009 | 0.001 | 1.11 | 1.19 | - | bal. |

Each of the seven kinds of drawn wire rods was heated to temperatures of Ac3 transformation points or higher by the use of a high frequency induction heating device capable of performing the series of processes, and then cooled with water. Then, the high frequency induction heating was further performed while the heating temperature and time were adjusted in the range of 200°C to Ac1 transformation points so that the tensile strength of the wire was in the range of 700-1300 Mpa, thereby manufacturing heat-treated steel wires as test pieces of examples and comparative examples shown in Table 2, below.

The cross sections of each of the heat-treated steel wires were subjected to mechanical cutting, chemical polishing, and electrolytic polishing, and thus cut and polished to thin films having a thickness of 0.1 mm. Then, in respective thin films, a 1/4 point of a circular diameter was photographed at 100,000 magnifications by a transmission electron microscope at an acceleration voltage of 200 KV, whereby the shapes of carbides in respective test pieces were observed and each percent spheroidization thereof was calculated.

In addition, each test piece was subjected to tensile test to determine tensile strength (TS). A compression test piece as in FIGS. 4a and 4b was subjected to a compression test, to determine the critical compressibility ($H_{crit}$).

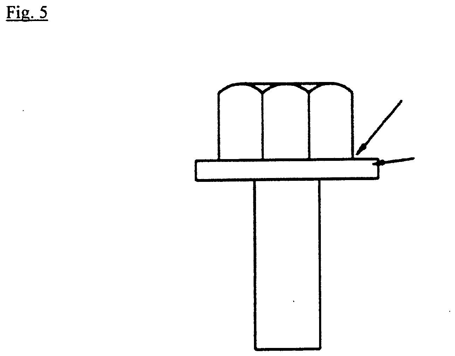

Further, a hexagonal headed flange bolt shown in FIG. 5 was subjected to cold processing, whereby whether any cracks appeared at the weakest portions, indicated by arrows, was examined. The results are shown in Table 2, below.

TABLE 2

| Cold Forging Characteristics of Quenched and Tempered Steel Wire | | | | | |
|---|---|---|---|---|---|
| | | Tensile Strength (N/mm$^2$) | Spheroidization (%) | Critical Compres. (%) | Cracks in Bolts |
| Steel Wire Sample 1 | Ex. 1 | 782 | 72.1 | 68.2 | ○ |
| | Ex. 2 | 825 | 41.3 | 63.7 | ○ |
| | Ex. 3 | 827 | 31.5 | 46.4 | ○ |
| | C.Ex.1 | 836 | 29.3 | 38.2 | × |
| Steel Wire Sample 2 | Ex.4 | 838 | 60.8 | 67.5 | ○ |
| | Ex.5 | 843 | 36.1 | 58.3 | ○ |
| | Ex.6 | 952 | 32.6 | 48.7 | ○ |
| | C.Ex.2 | 863 | 29.0 | 37.1 | × |
| Steel Wire Sample 3 | Ex.7 | 857 | 67.2 | 65.4 | ○ |
| | Ex.8 | 952 | 48.9 | 62.5 | ○ |
| | Ex.9 | 987 | 33.1 | 48.9 | ○ |
| | C.Ex.3 | 1073 | 28.3 | 37.3 | × |
| Steel Wire Sample 4 | Ex.10 | 947 | 57.9 | 55.6 | ○ |
| | Ex.11 | 961 | 32.4 | 42.3 | ○ |
| | C.Ex.4 | 832 | 28.7 | 32.7 | × |
| | C.Ex.5 | 1105 | 18.5 | 16.4 | × |
| Steel Wire Sample 5 | Ex.12 | 998 | 65.2 | 62.7 | ○ |
| | Ex.13 | 807 | 44.8 | 57.3 | ○ |
| | Ex.14 | 1015 | 31.9 | 42.3 | ○ |
| | C.Ex.6 | 1120 | 28.5 | 32.5 | × |
| Steel Wire Sample 6 | Ex.15 | 1052 | 56.3 | 57.2 | ○ |
| | Ex.16 | 972 | 43.2 | 54.1 | ○ |
| | Ex.17 | 1093 | 32.8 | 42.1 | ○ |
| | C.Ex.7 | 895 | 28.8 | 31.8 | × |
| Steel Wire Sample 7 | Ex.18 | 1095 | 53.0 | 51.6 | ○ |
| | Ex.19 | 813 | 33.2 | 42.0 | ○ |
| | C.Ex.8 | 1106 | 28.1 | 29.9 | × |
| | C.Ex.9 | 987 | 15.0 | 13.7 | × |
| Note: ○: appearance of no cracks, ×: appearance of cracks | | | | | |

From Table 2, it can be seen that the test pieces evaluated according to the present invention having the percent spheroidization of 30% or more represent the critical compressibility ($H_{crit}$) of 40% or more, regardless of kinds of steel. Further, since practically forged parts have no cracks, it will be apparent that the steel wire evaluated according to the present invention exhibit superior cold forging characteristics.

The following Table 3 shows characteristics of steel wire drawn to 2-25% after the steel wire having compositions of Table 1 was subjected to quenching and tempering treatment.

TABLE 3

| Cold Forging Characteristics of Steel Wire Drawn After Quenching and Tempering | | | | | | |
|---|---|---|---|---|---|---|
| | | Tensile Strength (N/mm$^2$) | Spheroidization (%) | Critical Compres. (%) | Stretch (%) | Cracks in Bolts |
| Steel Wire Sample 1 | Ex. 20 | 897 | 63.8 | 64.6 | 25.0 | ○ |
| | Ex. 21 | 915 | 43.3 | 62.8 | 10.7 | ○ |
| | Ex. 22 | 872 | 30.9 | 44.7 | 5.1 | ○ |
| | C.Ex. 10 | 988 | 28.7 | 36.5 | 13.2 | × |
| Steel Wire Sample 2 | Ex.23 | 855 | 62.5 | 60.3 | 5.0 | ○ |
| | Ex.24 | 913 | 33.0 | 53.7 | 13.2 | ○ |
| | C.Ex. 11 | 930 | 28.5 | 34.2 | 17.8 | × |
| | C.Ex. 12 | 1170 | 16.2 | 27.0 | 25.0 | × |
| Steel Wire Sample 3 | Ex.25 | 995 | 68.2 | 63.2 | 21.8 | ○ |
| | Ex.26 | 887 | 42.5 | 59.6 | 15.0 | ○ |
| | Ex.27 | 1132 | 32.6 | 45.1 | 17.2 | ○ |
| | C.Ex. 13 | 908 | 28.8 | 35.4 | 5.0 | × |
| Steel Wire Sample 4 | Ex.28 | 986 | 55.2 | 52.9 | 8.9 | ○ |
| | Ex.29 | 870 | 40.8 | 47.1 | 5.2 | ○ |
| | Ex.30 | 1035 | 32.1 | 42.1 | 16.3 | ○ |
| | C.Ex. 14 | 1073 | 29.1 | 31.3 | 24.8 | × |
| Steel Wire Sample 5 | Ex.31 | 1095 | 63.3 | 60.5 | 5.0 | ○ |
| | Ex.32 | 968 | 40.1 | 55.2 | 16.2 | ○ |
| | Ex.33 | 897 | 31.8 | 41.6 | 10.0 | ○ |
| | C.Ex. 15 | 1125 | 28.3 | 33.5 | 25.0 | × |
| Steel Wire Sample 6 | Ex.34 | 1075 | 59.1 | 54.2 | 10.3 | ○ |
| | Ex.35 | 869 | 32.5 | 43.0 | 5.1 | ○ |
| | C.Ex. 16 | 978 | 28.9 | 25.2 | 17.2 | × |
| | C.Ex. 17 | 1183 | 19.3 | 11.8 | 25.0 | × |

(continued)

| Cold Forging Characteristics of Steel Wire Drawn After Quenching and Tempering | | | | | | |
|---|---|---|---|---|---|---|
| | | Tensile Strength (N/mm$^2$) | Spheroidization (%) | Critical Compres. (%) | Stretch (%) | Cracks in Bolts |
| Steel Wire Sample 7 | Ex.36 | 893 | 51.2 | 48.8 | 8.9 | ○ |
| | Ex.37 | 972 | 44.3 | 45.6 | 5.0 | ○ |
| | Ex.38 | 1190 | 31.0 | 41.3 | 25.0 | ○ |
| | C.Ex. 18 | 1070 | 28.4 | 27.0 | 13.2 | × |
| Note: ○: appearance of no cracks, ×: appearance of cracks | | | | | | |

As shown in Table 3, a drawing process after quenching and tempering has no influence on the microstructures of carbides of the quenched and tempered steel wire evaluated according to the present invention, and thus superior cold forging characteristics are maintained at a predetermined level.

Industrial Applicability

As described above, the present invention provides a method for determining the suitability of a steel wire for cold forging. Such steel wire is advantageous in that:

(1) in the manufacturing of steel wire, there is required no spheroidizing annealing process requiring a long period, and thus it is possible to manufacture quenched and tempered steel wire having cold forging characteristics equal or superior to those of speroidizing annealed steel wires, thus increasing productivity.
(2) in the manufacturing of machine parts, quenching and tempering processes are not additionally performed for the enhancement of strengths after cold forging process, thereby achieving energy saving and improvement of working conditions. Further, by performing only a forging process, it is possible to manufacture machine parts having strength and toughness equal or superior to those of conventional parts. Thus, management of product quality and process are simplified, resulting in improvement in productivity.

**Claims**

1.    A method for determining the suitability of a steel wire for cold forging comprising the steps of

- providing a steel wire comprising 0,1-0,5 wt% of C, 1,0 wt% or less of Si, 0,20-2,5 wt% of Mn, 0,03 wt% or less of P, and 0,03 wt% or less of S, and optionally comprising at least one component selected from among 0,05-2,0 wt% of Cr, 0,05-1,5 wt% of Mo and 0,0003-0,0050 wt% of B, with the balance being Fe and inevitable impurities and
- quenching and tempering the steel wire,
- determining the tensile strength of the steel wire,
- determining the percent spherodization of carbides as observed by a transmission electron microscope,
- determining that the steel wire is suitable for cold forging without further quenching and/or tempering and without spheroidizing annealing if it has a tensile strength in a range of 700-1.300 Mpa and percent spheroidization of carbides not less than 30%.

2.    The method according to claim 1, comprising the further step of drawing the steel wire after the quenching and tempering step.

**Patentansprüche**

1.    Verfahren zur Bestimmung der Eignung eines Stahldrahtes zum Kaltschmieden umfassend die Schritte:

- Bereitstellen eines Stahldrahts, weicher 0,1-0,5 Gew.-% C, 1,0 Gew.-% oder weniger Si, 0,20-2,5 Gew.-% Mn, 0,03 Gew.-% oder weniger P und 0,03 Gew.-% oder weniger S umfasst und optional mindestens eine Komponente, ausgewählt aus 0,05-2,0 Gew.-% Cr, 0,05-1,5 Gew.-% Mo und 0,0003-0,0050 Gew.-% B, umfasst, wobei der Rest Fe und unvermeidbare Verunreinigungen sind, und
- Quenching und Tempern des Stahldrahts,
- Bestimmen der Zugfestigkeit des Stahldrahts,
- Bestimmen der prozentualen Sphäroidisierung von Carbiden durch Beobachtung mit einem Transmissionselektronenmikroskop,
- Bestimmen, dass der Stahldraht zum Kaltschmieden ohne vorheriges Quenching und/oder Tempern und ohne Weichglühen geeignet ist, wenn er eine Zugfestigkeit in einem Bereich von 700-1.300 Mpa und eine prozentuale Sphäroidisierung von Carbiden von nicht weniger als 30% aufweist.

2. Verfahren gemäß Anspruch 1, welches den weiteren Schritt des Ziehens des Stahldrahts nach dem Quenching- und Temper-Schritt umfasst.

**Revendications**

1. Méthode de détermination de l'aptitude au forgeage à froid d'un fil d'acier, comprenant les étapes de

- fourniture d'un fil d'acier comprenant 0,1 à 0,5 % en poids de C, 1,0 % en poids ou moins de Si, 0,20 à 2,5 % en poids de Mn, 0,03 % en poids ou moins de P et 0,03 % en poids ou moins de S, et comprenant éventuellement au moins un composant choisi parmi 0,05 à 2,0 % en poids de Cr, 0,05 à 1,5 % en poids de Mo et 0,0003 à 0,0050 % en poids de B, le reste étant Fe et des impuretés inévitables, et
- trempe et revenu du fil d'acier,
- détermination de la force de traction du fil d'acier,
- détermination du pourcentage de sphéroïdisation des carbures comme observé au microscope électronique à transmission,
- détermination que le fil d'acier est apte au forgeage à froid sans trempe ni revenu supplémentaire et sans recuit par sphéroïdisation s'il a une force de traction dans une plage de 700 à 1300 MPa et un pourcentage de sphéroïdisation des carbures d'au moins 30 %.

2. Méthode selon la revendication 1, comprenant l'étape supplémentaire de tréfilage du fil d'acier après l'étape de trempe et de revenu.

Fig.1

Fig. 2

Fig. 3a

0.1 μm

Fig. 3b

Fig. 4a

$H_0 = 21$

$d_0 = 14$

Fig. 4b

R=0.15
±0.05

0.8
±0.05

30±5°

Fig. 5

**EP 1 521 860 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1293578 A2